# FASCICULE DE BREVET EUROPEEN

(11) **EP 2 285 850 B1**
(45) Date de publication et mention de la délivrance du brevet: **20.06.2012**
(21) Numéro de dépôt: 09761918.3
(22) Date de dépôt: 19.05.2009
(51) Int. Cl.: C08F 293/00, C08F 2/16

(54) **PROCEDE DE PREPARATION D'UNE DISPERSION DE PARTICULES POLYMERIQUES EN MILIEU AQUEUX**
VERFAHREN ZUR HERSTELLUNG EINER POLYMERPARTIKELDISPERSION IN EINEM WÄSSRIGEN MEDIUM
METHOD FOR PREPARING A POLYMER PARTICLE DISPERSION IN AN AQUEOUS MEDIUM

(30) Priorité: 19.05.2008 FR 0853218
(43) Date de publication de la demande: 23.02.2011
(73) Titulaire: Arkema France, 92700 Colombes (FR); Centre National de la Recherche Scientifique, 75794 Paris (FR); UNIVERSITE PIERRE ET MARIE CURIE (PARIS 6), 75252 Paris (FR)
(72) Inventeur: DIRE, Charlotte, 63100 CLERMONT-FERRAND (FR); CHARLEUX, Bernadette, F-69003 Lyon (FR); MAGNET, Stéphanie, F-64370 Morlanne (FR); COUVREUR, Laurence, F-75009 Paris (FR)
(74) Mandataire: Albani, Dalila
(86) Numéro de dépôt international: PCT/FR2009/050933
(87) Numéro de publication internationale: WO 2009/150367

(56) Documents cités:
- WO-A-03/070799
- G. DELAITTRE ET AL: "Surface-free synthesis of amphiphilic diblock copolymer nanoparticles via nitroxide-mediated emulsion polymerization" CHEMICAL COMMUNICATIONS, 2005, pages 614-616, XP002508142
- ANGEW. CHEM. INT. ED., vol. 43, no. 45, 2004, pages 6186-6189, XP002508143
- MACROMOLECULES, vol. 39, 2006, pages 8274-8282, XP002508144

## Description

### DOMAINE TECHNIQUE

La présente invention a trait à un procédé de préparation d'une dispersion aqueuse de particules polymériques, ce procédé présentant l'avantage de nécessiter des températures n'excédant pas 100°C.

Les dispersions aqueuses de particules de polymères obtenues (intitulées également latex) peuvent être utilisées telles quelles ou bien sous forme sèche, après évaporation du milieu de dispersion, en tant qu'agents tensio-actifs ou stabilisants de suspensions de polymères en milieu aqueux, en tant qu'additifs pour des matrices polymériques, en tant que dispersants de pigments organiques ou inorganiques ou encore de compatibilisants entre plusieurs matrices polymériques.

Les dispersions aqueuses de particules de polymères obtenues par ce procédé peuvent être également utilisées directement ou bien sous forme sèche, après évaporation du milieu de dispersion, comme liants ou comme bases de formulations d'adhésifs ou de revêtements de surface tels que des peintures, des revêtements textile, des revêtements cuir, des revêtements de non-tissé, des revêtements papier ou encore dans des formulations cosmétiques.

Enfin, les particules de polymères obtenues en dispersion ou après séchage peuvent également être utilisées comme semence de polymérisation, à savoir que le polymère en suspension peut être réengagé dans une autre étape de polymérisation en milieu dispersé, par exemple, en présence de monomères hydrophobes, les dispersions résultantes pouvant être utilisées comme liants ou comme bases pour des formulations d'adhésifs, de revêtements de surface tels que des peintures, des vernis, des revêtements pour textile, pour cuir, pour non-tissé, pour papier ou encore dans des formulations cosmétiques.

Dans la cosmétique, les dispersions de l'invention ou leur extrait sec peuvent être utilisées dans les produits de soin capillaire, les produits de soin ou de maquillage du visage, ou encore le maquillage des cils ou des ongles.

### ÉTAT DE LA TECHNIQUE ANTÉRIEURE

Des procédés de préparation de dispersions aqueuses contenant des particules polymériques à partir d'un macroamorceur vivant ont déjà fait l'objet de nombreux travaux dans l'art antérieur.

Ainsi, il est décrit dans l'article Chem. Commun., 2005, 614-616, un procédé de préparation de nanoparticules mettant en oeuvre un macroinitiateur du type poly(acrylate de sodium)-SG₁, SG₁ étant tel que défini ci-dessous :

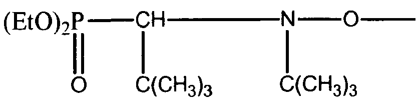

L'obtention de particules nécessite une étape d'amorçage dudit macroinitiateur à une température de 120°C. En effet, du fait de la nature même du macroinitiateur impliqué dans ce procédé (monomère du type acrylique) et compte tenu de la température de clivage d'une liaison acrylique-SG₁, il est impossible de travailler à des températures moindres pour permettre un réamorçage efficace et une insertion optimale des monomères styrène ou acrylate destinés à constituer le deuxième bloc. Il est décrit notamment, l'obtention à 120°C de nanoparticules de copolymères blocs du type poly(acrylate de sodium)-b-polystyrène ou poly(acrylate de sodium)-b-poly(acrylate de n-butyle). De telles conditions de températures génèrent une augmentation de pression à l'intérieur du réacteur, ce qui implique d'avoir à disposition des équipements de polymérisation qui sont aptes à supporter des pressions élevées (de l'ordre de 3 à 5 bars).

Il existe donc un véritable besoin pour un procédé de préparation de dispersion aqueuse de particules polymériques pouvant être mis en oeuvre en milieu aqueux et à des températures ne dépassant pas 100°C, ceci permettant ainsi de travailler à pression atmosphérique et de surmonter les inconvénients liés à l'utilisation de températures élevées et d'un milieu organique.

### EXPOSÉ DE L'INVENTION

Ainsi, l'invention a trait à un procédé de préparation d'une dispersion aqueuse de particules polymériques comprenant les étapes suivantes :
a) une étape de mise en contact, en milieu aqueux, d'au moins un monomère hydrophobe méthacrylate seul ou en mélange avec d'autres monomères hydrophobes, avec un macroamorceur vivant, ce macroamorceur vivant étant obtenu par polymérisation d'un ou plusieurs monomères en présence d'un agent de contrôle alcoxyamine répondant à l'une des formules (I) et (III) suivantes: 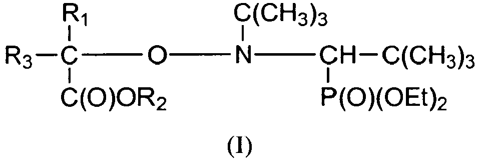 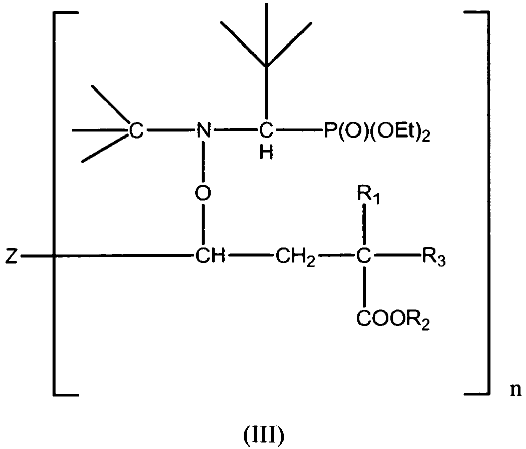 dans lesquelles :
   * R₁ et R₃, identiques ou différents, représentent un groupe alkyle, linéaire ou ramifié, ayant un nombre d'atomes de carbone allant de 1 à 3 ;
   * R₂ représente un atome d'hydrogène, un groupe alkyle, linéaire ou ramifié, ayant un nombre d'atomes de carbone allant de 1 à 8, un groupe phényle, un métal alcalin tel que Li, Na, K, un ion ammonium tel que NH₄⁺, NHBu₃⁺; de préférence R₁ et R₃ étant CH₃ et R₂ étant H ;
   * Z représente un groupe aryle ou un groupe de formule Z₁-[X-C(O)]ₙ, dans laquelle Z₁ représente une structure polyfonctionnelle provenant par exemple d'un composé du type polyol, X est un atome d'oxygène, un atome d'azote porteur d'un groupement carboné ou d'un atome d'hydrogène, ou un atome de soufre ; et n est un nombre entier supérieur ou égal à 2 ;
   l'un au moins des monomères entrant dans la constitution du macroamorceur vivant étant un monomère hydrophile méthacrylique ou méthacrylate et le macroamorceur obtenu étant apte à être réengagé dans une réaction de polymérisation à une température inférieure à 100°C ;
b) une étape de chauffage à une température inférieure à 100°C, moyennant quoi la polymérisation du ou des monomères mentionnés à l'étape a) est engagée à partir du macroamorceur tel que défini à l'étape a).

On précise que l'abréviation Et correspond au groupe éthyle et que l'abréviation Bu correspond au groupe butyle, lequel peut exister sous différentes formes isomères (n-butyle, sec-butyle, tert-butyle).

Grâce au procédé de l'invention, on obtient ainsi une dispersion aqueuse de particules constituées d'un copolymère bloc, à savoir un premier bloc correspondant à la séquence du macroamorceur vivant, ledit premier bloc comprenant des unités répétitives issues de la polymérisation d'au moins un monomère hydrophile méthacrylique ou méthacrylate et un second bloc lié de façon covalente au premier bloc, ledit second bloc comprenant un enchaînement d'unités répétitives issues de la polymérisation d'au moins un monomère hydrophobe méthacrylate.

D'un point de vue structural, les particules constitutives de la dispersion aqueuse obtenue selon le procédé de l'invention ont la capacité de se replier sur elles-mêmes, en formant un coeur comprenant la partie hydrophobe et sur le pourtour du coeur des chaînes déployées constituant la partie hydrophile. On peut parler ainsi de particules chevelues.

Le procédé de l'invention présente les avantages suivants :
- la possibilité d'engager une étape de réamorçage à une température inférieure à 100°C, et ce en milieu aqueux, grâce à la découverte par les inventeurs de macroamorceurs aptes à se réengager, en milieu aqueux, à un tel niveau de températures, ce niveau de températures étant avantageux pour un industriel, en termes de coûts de fabrication, de consommation d'énergie, de reproductibilité ;
- le fait que le procédé se déroule en milieu aqueux permet de contourner tous les inconvénients liés à l'utilisation d'un milieu solvant organique (telle que la non-toxicité pour les personnes en charge de fabrication et les problèmes liés au rejet dans l'atmosphère) et les particules obtenues en fin de procédé peuvent être utilisées telles quelles, à savoir sans nécessiter d'étapes de post-traitement.

Selon l'invention, on précise que, par macroamorceur vivant, on entend un polymère comprenant au moins une extrémité apte à être réengagée dans une réaction de polymérisation par ajout de monomères à une température et pression appropriées. Le terme macroamorceur vivant » correspond aussi à la terminologie « polymère vivant ».

Selon l'invention, le macroamorceur est apte à être réengagé dans une réaction de polymérisation à une température inférieure à 100°C, et avantageusement à pression atmosphérique.

Les macroamorceurs vivants de l'invention sont issus de la polymérisation, en présence d'agents de contrôle de formules (I) et/ou (III) telles que définies ci-dessus, d'un ou plusieurs monomères hydrophiles méthacryliques ou méthacrylates, de sorte que les macroamorceurs résultants puissent être réengagés dans une réaction de polymérisation en milieu aqueux à une température inférieure à 100°C.

On précise que par monomères hydrophiles, on entend un monomère présentant une ou plusieurs fonctions aptes à établir des liaisons hydrogènes avec l'eau.

Par monomère méthacrylate hydrophile, on entend un monomère méthacrylate dont le caractère hydrophile est conféré par des fonctions pendantes hydrophiles, telle qu'une fonction polyalkylèneglycol.

Le caractère hydrophile d'un monomère méthacrylique lui est conféré classiquement par la fonction carboxyle pendante.

Des monomères hydrophiles méthacryliques ou méthacrylates peuvent être avantageusement l'acide méthacrylique, les sels d'acide méthacrylique (tels que les sels de métal alcalin, comme les sels de sodium), un méthacrylate de poly(alkylèneglycol) (tel que le méthacrylate de polyéthylèneglycol) et les mélanges de ceux-ci.

Le macroamorceur peut comprendre, en outre, des unités répétitives issues de la polymérisation de monomères hydrophiles autres que ceux mentionnés ci-dessus, parmi lesquels on peut citer les monomères styréniques hydrophiles, tels que le styrène sulfonate, les monomères acrylamides ou méthacrylamide substitués ou non.

Le macroamorceur peut comprendre également, des unités répétitives issues de la polymérisation de monomères hydrophobes.

Des monomères hydrophobes susceptibles d'entrer dans la constitution des macroamorceurs vivants utilisés dans le procédé de l'invention sont avantageusement des monomères styréniques, tels que le styrène ou l'α-méthylstyrène.

Dans ces cas de figure, à savoir lorsque le macroamorceur comprend des unités répétitives issues de monomères autres que des monomères hydrophiles méthacryliques ou méthacrylates, il est préférable que le macroamorceur vivant comprenne une proportion supérieure à 80% en moles, de préférence encore supérieure à 90% en moles, d'unités répétitives issues de la polymérisation de monomères hydrophiles méthacryliques ou méthacrylates tels que définies ci-dessous (le reste jusqu'à 100% étant constitué par des monomères autres que les monomères hydrophiles méthacryliques ou méthacrylates), de sorte à ce que la polymérisation puisse être réengagée aisément à une température inférieure à 100°C. Les pourcentages en moles sont données par rapport au nombre de moles total du mélange de monomères initial.

La proportion d'unités répétitives issues de monomères hydrophobes est avantageusement inférieure à 20% en moles, plus précisément, peut aller de 4 à 9% en moles.

Un macroamorceur vivant pouvant être avantageusement utilisé conformément au procédé de l'invention est un copolymère comprenant des unités répétitives issues de la polymérisation de l'acide méthacrylique et du styrène (et ce à une teneur allant de préférence de 4 à 9% en moles), l'acide méthacrylique pouvant être sous forme d'un sel, tel qu'un sel de sodium.

Comme mentionné ci-dessous, les macroamorceurs sont préparés par polymérisation d'au moins un monomère hydrophile méthacrylique ou méthacrylate, tel que l'acide méthacrylique, et éventuellement d'un monomère hydrophobe, tel que le styrène, en présence d'agents de contrôle de formules (I) et/ou (III) telles que définies ci-dessus.

A titre d'exemple d'agent de contrôle susceptible d'être utilisé, on peut citer l'alcoxyamine répondant à la formule suivante :

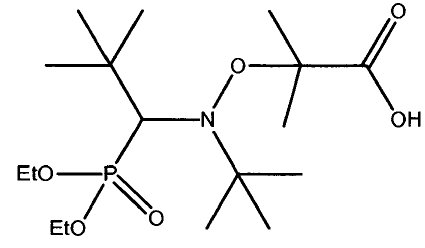

Les agents de contrôle de formule (III) sont issus généralement d'un procédé consistant à faire réagir une ou plusieurs alcoxyamines de formule (I) suivante : 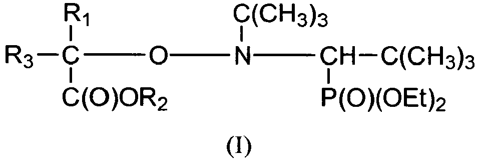 dans laquelle R₁, R₂ et R₃ sont tels que définis précédemment,
avec au moins un composé polyinsaturé de formule (II) : 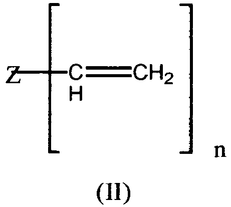 dans laquelle Z représente un groupement aryle ou un groupe de formule Z₁-[X-C(O)]ₙ, dans laquelle Z₁ représente une structure polyfonctionnelle provenant par exemple d'un composé du type polyol, X est un atome d'oxygène, un atome d'azote porteur d'un groupement carboné ou d'un atome d'hydrogène, ou un atome de soufre et n est un nombre entier supérieur ou égal à 2,
en présence ou non de solvant(s), de préférence choisi(s) parmi les alcools comme l'éthanol, les solvants aromatiques, les solvants chlorés, les éthers et les solvants polaires aprotiques,
à une température allant, en général, de 0 à 90°C, de préférence de 25 à 80°C,
le ratio molaire entre alcoxyamine(s) monofonctionnelle(s) de formule (I) et composé(s) polyinsaturé(s) de formule (II) allant de 1,5 à 1,5 n, de préférence, de n à 1,25 n, n étant tel que défini ci-dessus.

A titre d'exemples de composés polyinsaturés utilisables pour réaliser des alcoxyamines polyfonctionnelles telles que définies ci-dessus, on peut citer les vinylbenzènes polyfonctionnels (Z étant alors un groupe aryle) ou parmi les dérivés acryliques polyfonctionnels (Z étant alors un groupe de formule Z₁-[X-C(O)]ₙ). De préférence, le composé polyinsaturé est le divinylbenzène, le trivinylbenzène, l'éthylène glycol diacrylate, le 1,3-butanediol diacrylate, le 1,4-butanediol diacrylate, le 1,6-hexanediol diacrylate, le néopentyl glycol diacrylate, le cyclohexane diméthanol diacrylate, le diéthylène glycol diacrylate, le triéthylène glycol diacrylate, le tétraéthylène glycol diacrylate, le dipropylèneglycol diacrylate, le tripropylèneglycol diacrylate, les polyéthylène glycol diacrylates (commercialisés par Sartomer sous les dénominations SR259, SR344, SR610), les hexanediol diacrylates alcoxylés (commercialisés par Sartomer sous les dénominations CD561, CD564, CD560), le bisphénol-A diacrylate, les bisphénol-A diacrylate éthoxylés (commercialisés par Sartomer sous les dénominations SR 349, SR601, SR602, CD9038), le triméthylolpropane triacrylate, le pentaérythritol triacrylate, le tris(2-hydroxyéthyl)isocyanurate triacrylate, les triméthylolpropane triacrylate éthoxylés (commercialisés par Sartomer sous les dénominations SR454, SR499, SR502, SR9035, SR415), le glycéryl triacrylate propoxylé (commercialisé par Sartomer sous la dénomination SR9020), les triméthylolpropane triacrylate propoxylés (commercialisés par Sartomer sous les dénominations SR492 et CD501), le pentaérythritol tétraacrylate, le di-triméthylolpropane tétracrylate, le pentaérythritol tétraacrylate éthoxylé (commercialisé par Sartomer sous la dénomination SR494), le dipentaérythritol pentacrylate, les caprolactones modifiées dipentaérythritol hexaacrylate (commercialisés par Sartomer sous les dénominations Kayarad DCPA20 et DCPA60), le dipentaérythritol polyacrylate (commercialisé par UCB Chemicals sous la dénomination DPHPA).

Lorsque Z correspond à la formule Z₁-[X-C(O)]ₙ, les agents de contrôle répondent à la formule (IIIa) suivante : 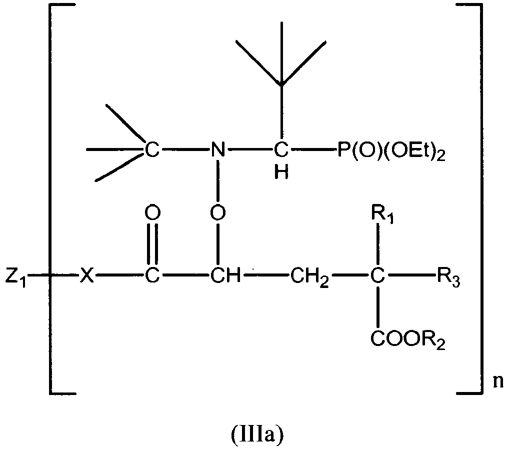 Z₁ correspondant généralement à un groupe alkylène.

Un exemple particulier d'agent de contrôle conforme à la définition générale donnée ci-dessus est l'alcoxyamine polyfonctionnelle répondant à la formule suivante : 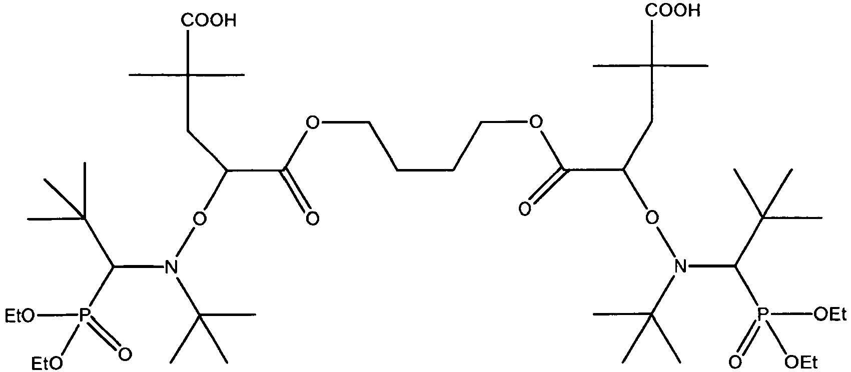 cette alcoxyamine polyfonctionnelle étant issue de la réaction d'une alcoxyamine monofonctionnelle de formule (I) avec du 1,4-butanediol diacrylate.

Avec de tels agents de contrôle, l'on obtient ainsi un macroamorceur vivant comprenant une extrémité de formule suivante : 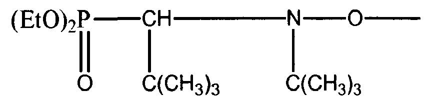 cette extrémité étant désignée par l'abréviation SG₁.

Ce macroamorceur comprenant une telle extrémité réactive peut être réengagé dans une réaction de polymérisation à une température inférieure à 100°C, moyennant l'ajout de monomères, ce qui est le cas lors de la mise en oeuvre de l'étape a).

Les monomères ajoutés dans l'étape a) sont des monomères hydrophobes méthacrylates, qui peuvent être avantageusement des méthacrylates d'alkyle, tels que le méthacrylate de méthyle.

Outre les monomères hydrophobes méthacrylates susmentionnés, les monomères ajoutés au cours de l'étape a) peuvent être des monomères hydrophobes choisis parmi les acrylates d'alkyles, les monomères styréniques (tels que le styrène) et les mélanges de ceux-ci et/ou des monomères hydrophiles tels que ceux listés ci-dessus pour la constitution du macroamorceur vivant.
Dans le cas où des monomères autres que des monomères hydrophobes méthacrylates sont ajoutés au cours de l'étape a), les monomères hydrophobes méthacrylates seront présents, avantageusement, en une proportion supérieure à 80% en moles, de préférence supérieure à 90% en moles, par rapport au nombre de moles total de monomères introduits au cours de l'étape a), le reste jusqu'à 100% étant constitué des monomères autres que les monomères hydrophobes méthacrylates.

On précise que l'étape d'ajout a) est effectuée en milieu aqueux, c'est-à-dire un milieu comprenant majoritairement de l'eau.

Enfin, l'étape b) consiste à porter le milieu généré à l'étape a) à une température inférieure à 100°C, moyennant quoi la polymérisation du ou des monomères mentionnés à l'étape a) est engagée à partir du macroamorceur tel que défini à l'étape a).

Dans le cas d'un macroamorceur vivant du type poly(méthacrylate de sodium-co-styrène)-SG₁, la température de réamorçage est inférieure à 70°C.

Le procédé de l'invention peut comprendre, en outre, une étape de polymérisation en un polymère des monomères non convertis au cours de l'étape b), ledit polymère étant de nature chimique similaire au bloc crée lors de l'étape b) et étant ainsi compatible avec ledit bloc.

Par polymère compatible avec ledit bloc, on entend un polymère susceptible d'interagir avec ledit bloc, de sorte à être miscible dans ledit bloc.

Cette étape de polymérisation est réalisée classiquement après l'étape b) par polymérisation radicalaire classique, à savoir par adjonction au milieu dans lequel vient d'être réalisé le bloc, d'un initiateur de polymérisation radicalaire dit classique choisi, généralement, parmi les composés peroxydes (tels qu'un composé peroxyde de la gamme Luperox^{™}, les composés persulfates (tels que le persulfate de sodium, le persulfate de potassium, le persulfate d'ammonium), les composés azoïques (tels que le bis-azidoisobutyronitrile, intitulé AiBN, le 2,2'-azobis(2-amidinopropane) dihydrochlorure et les sels métalliques et ammoniacaux de l'acide 4,4'-azobis(4-cyanopentanoïque)), les composés redox (tels que le couple persulfate (de sodium, potassium ou ammonium/vitamine C, le couple persulfate/métabisulfite de sodium ou de potassium, le couple eau oxygénée/sels de l'ion ferreux, le couple hydroperoxyde de tertiobutyle /sulfoxylate de sodium ainsi que toute autre combinaison possible oxydant(s)/réducteur(s)).

Des particules susceptibles d'être préparées en suspension dans un milieu aqueux conformément au procédé de l'invention peuvent être des particules en un copolymère bloc poly(méthacrylate de sodium-co-styrène)-b-polyméthacrylate d'alkyle, poly(méthacrylate de sodium-co-styrène)-b-poly(méthacrylate d'alkyle-co-styrène) ou poly(méthacrylate de sodium-co-styrène sulfonate de sodium)-b-poly(méthacrylate de méthyle-co-styrène).

Les particules préparées selon le procédé de l'invention sont des particules nanométriques, c'est-à-dire des particules présentant un diamètre allant de 10 à 500 nm, et plus précisément de 30 à 120 nm.

L'invention a également pour objet des dispersions aqueuses comprenant des particules susceptibles d'être obtenues par le procédé tel que défini ci-dessus.

Enfin, le procédé de l'invention peut comprendre, si besoin est, une étape d'isolement des particules du milieu aqueux, cette étape d'isolement pouvant être réalisée, par exemple, par des techniques de coagulation ou d'atomisation, éventuellement associée à une étape de séchage (correspondant à une évaporation du milieu de dispersion).

Ainsi, l'invention a trait aussi à un procédé de préparation de particules polymériques comprenant :
- une étape de mise en oeuvre d'un procédé de préparation d'une dispersion aqueuse de particules polymériques tel que défini ci-dessus ; et
- une étape d'isolement desdites particules ;
ainsi qu'à des particules susceptibles d'être obtenues par ledit procédé.

De par leurs propriétés intrinsèques, les dispersions aqueuses de l'invention peuvent trouver des applications dans le domaine des revêtements de surface.

Grâce à la nature amphiphile des particules polymériques constituant les dispersions aqueuses de l'invention, les dispersions sont autostabilisées en milieu aqueux, du fait des propriétés tensioactives générées par l'amphiphilie susmentionnée.

Les particules polymériques peuvent être utilisées telles quelles en dispersion ou bien sous forme sèche, après évaporation du milieu de dispersion.

Ainsi, les particules de l'invention peuvent être utilisées en tant qu'agents tensio-actifs ou stabilisants de suspensions de polymères en milieu aqueux, en tant qu'additifs pour des matrices polymériques, de dispersants de pigments organiques ou inorganiques, ou encore de compatibilisants entre plusieurs matrices polymériques.

Les dispersions aqueuses de particules de polymères obtenues par ce procédé peuvent être également utilisées directement ou bien sous forme sèche après évaporation du milieu de dispersion, comme liants ou comme bases de formulations d'adhésifs, de revêtements de surface ou dans des formulations cosmétiques, ou encore comme semence de polymérisation, par exemple, en présence de monomères hydrophobes, les dispersions résultantes pouvant être utilisées comme liants ou comme bases pour des formulations d'adhésifs, de revêtements de surface tels que des peintures, des vernis, des revêtements pour textile, pour cuir, pour non-tissé, pour papier ou dans des formulations cosmétiques.

Les dispersions susmentionnées peuvent avoir aussi la propriété de former, une fois l'évaporation du milieu de dispersion effectuée, des films polymériques, de telles propriétés filmogènes étant intéressantes pour des revêtements tels que des peintures, des vernis, des revêtements pour textile, pour cuir, pour non-tissé, pour papier ou dans la cosmétique (comme pour les produits de soin capillaire, de maquillage des cils ou des ongles).

Les particules de polymères obtenues peuvent être isolées du milieu aqueux dans lesquelles elles ont été synthétisées et être utilisées ultérieurement dans un autre milieu pour les applications susmentionnées.

L'invention va maintenant être décrite à l'aide des exemples suivants donnés à titre illustratif et non limitatif.

### Exemple 1: Préparation du macroamorceur poly(acide méthacrylique-co-styrène)

L'exemple 1 illustre la préparation d'un copolymère vivant poly(acide méthacrylique-co-styrène), utilisé comme macroamorceur, agent de contrôle et stabilisant pour la mise en oeuvre du procédé de l'invention, l'acide méthacrylique et le styrène étant abrégés MAA et Sty.

Pour ce faire, un mélange contenant 62,4 g d'acide méthacrylique (4,37 mol.L⁻¹), 7,3 g de styrène (0,424 mol.L⁻¹), 0,464 g de SG1 libre (9,5*10⁻³ mol.L⁻¹) et 99,47 g de 1,4-dioxane (96,2 mL) est dégazé à température ambiante par un bullage d'azote pendant 20 minutes. L'alcoxyamine BlocBuilder® (vendu par Arkema) (5,94 g, 9,4*10⁻² mol.L⁻¹) est ensuite ajoutée, cette alcoxyamine répondant à la formule suivante : 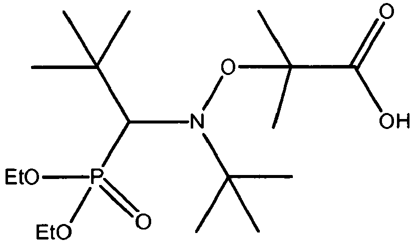 et le dégazage est poursuivi pendant 10 minutes. Le mélange dégazé est introduit dans un tricol de 500 mL, préchauffé à 73°C, surmonté d'un réfrigérant, d'une entrée d'azote et d'un thermomètre. La polymérisation est réalisée à 73°C et le temps t=0 est déclenché lorsque la température atteint 70°C dans le milieu réactionnel. Le macroamorceur obtenu est le P(MAA-co-Sty)-SG₁. Des prélèvements sont réalisés à intervalles de temps réguliers afin de :
- déterminer la cinétique de polymérisation (détermination des conversions par RMN ¹H (DMSO d₆, 250 MHz) ;
- suivre l'évolution des masses molaires moyennes en nombre (Mn) en fonction de la conversion en monomères.

Le tableau 1 ci-dessous présente l'évolution des conversions en fonction du temps ainsi que l'évolution des masses molaires moyennes en nombre avec la conversion.

Les Mₙ théoriques et expérimentales sont déterminées par chromatographie d'exclusion stérique dans le THF, avec calibration au polyméthacrylate de méthyle, après méthylation des unités acide méthacryliques en unités méthacrylate de méthyle.

L'indice de polydispersité Iₚ est calculé à partir d'unités méthacrylates de méthyle.

**Tableau 1**

| Temps (min) | Conversion | M_{n, expérimental} | M_{n théorique} | Iₚ |
|---|---|---|---|---|
| | (%) | (g.mol⁻¹) | (g.mol⁻¹) | |
| 15 | 20 | 1300 | 1400 | 1,59 |
| 40 | 26 | 1500 | 1700 | 1,63 |
| 60 | 31 | 1750 | 1950 | 1,66 |
| 80 | 36 | 1950 | 2200 | 1,68 |
| 110 | 37 | 2500 | 2300 | 1,5 |

### Exemple 2 :

L'exemple 2 illustre la synthèse de nanoparticules chevelues de copolymères blocs poly(méthacrylate de sodium-co-styrène)-b-polyméthacrylate de méthyle à partir du macroamorceur préparé dans l'exemple 1.

Dans un ballon monocol de 250 mL sont introduits 64,8 g d'eau permutée, 1,26 g de macroamorceur P(MAA-co-Sty)-SG₁ (5,25*10⁻⁴ mol) préparé dans l'exemple 1, 15,2 g de soude 1M (1 éq. par rapport aux unités acide méthacrylique) et 0,301 g de Na₂CO₃ (3,56*10⁻² mol.L⁻¹). Ce mélange est agité à température ambiante, pendant 15 minutes environ, jusqu'à dissolution complète du macroamorceur, qui est alors sous la forme poly(méthacrylate de sodium-co-styrène). 20,39 g de méthacrylate de méthyle sont ensuite ajoutés (taux de solide=20%) et le mélange est dégazé par un bullage d'azote à température ambiante pendant 30 minutes. La température est ensuite augmentée à 40°C et le temps t=0 est arbitrairement déclenché au début de la montée en température. Des prélèvements sont réalisés à intervalles réguliers afin de :
- déterminer la cinétique de polymérisation par gravimétrie (mesure d'extrait sec) ;
- suivre l'évolution des masses molaires moyennes en nombre (Mn) avec la conversion en monomères ;
- évaluer les caractéristiques colloïdales du latex (diamètre moyen des particules, distribution en taille des particules (polydispersité)). Les résultats obtenus sont présentés dans le Tableau 2 ci-dessous.

**Tableau 2**

| Temps (h) | Conversion (%) | M_{n.exp}^{a} g.mol⁻¹ | Mₙ, théo^{b} g.mol⁻¹ | Iₚ^{a} | f^{c} | dz^{d} (nm) | σ^{e} | Nₚ^{f} (10¹⁴/ cm³) |
|---|---|---|---|---|---|---|---|---|
| 1,5 | 20,8 | 56200 | 10800 | 1,5 | 0,15 | - | - | - |
| 2 | 27,2 | 53700 | 13200 | 1,57 | 0,21 | 99 | 0,003 | 9,63 |
| 4 | 42,1 | 47500 | 19000 | 1,77 | 0,36 | 113 | 0,034 | 1,00 |
| 5 | 50,7 | 49100 | 22300 | 1,68 | 0,42 | 118 | 0,012 | 1,06 |
| 6 | 54,3 | 49200 | 23700 | 1,69 | 0,45 | 120 | 0,011 | 1,08 |
| 30,5 | 72,6 | 34900 | 30800 | 2,07 | 0,87 | 123 | 0,023 | 1,34 |
| 46,5 | 73,6 | 35300 | 31200 | 2,06 | 0,88 | 119 | 0,021 | 1,50 |

| | | | | | | | | |
|---|---|---|---|---|---|---|---|---|
| (a) Déterminées par chromatographie d'exclusion stérique dans le THF, avec calibration au polyméthacrylate de méthyle, après méthylation des unités acide méthacryliques en unités méthacrylate de méthyle ; (b) Calculées à partir d'unités méthacrylate de méthyle ; (c) Efficacité d'amorçage ; (d) Diamètre moyen en z des particules ; (e) Polydispersité des latex ; (f) Nombre de particules | | | | | | | | |

Le latex obtenu en fin de polymérisation est stable et présente d'excellentes caractéristiques colloïdales, avec en particulier une distribution étroite des tailles de particules.

### Exemple 3 :

L'exemple 3 illustre la synthèse de nanoparticules chevelues de copolymères blocs poly(méthacrylate de sodium-co-styrène)-b-poly(méthacrylate de méthyle-co-styrène) à partir du macroamorceur préparé dans l'exemple 1.

Dans un ballon monocol de 250 mL sont introduits 64,6 g d'eau permutée, 1,27 g de macroamorceur P(MAA-co-Sty)-SG₁ (5,29*10⁻⁴ mol) préparé dans l'exemple 1, 15,2 g de soude 1M (1 éq. par rapport aux unités acide méthacrylique) et 0,301 g de Na₂CO₃ (3,56*10⁻² mol.L⁻¹). Ce mélange est agité à température ambiante, pendant 15 minutes environ, jusqu'à dissolution complète du macroamorceur, qui est alors sous la forme poly(méthacrylate de sodium-co-styrène). 19,38 g de méthacrylate de méthyle et 0,64 g de styrène sont ensuite ajoutés (taux de solide=19,7%) et le mélange est dégazé par un bullage d'azote à température ambiante pendant 30 minutes. La température est ensuite augmentée à 60°C et le temps t=0 est arbitrairement déclenché au début de la montée en température. Des prélèvements sont réalisés à intervalles réguliers afin de :
- déterminer la cinétique de polymérisation par gravimétrie (mesure d'extrait sec) ;
- suivre l'évolution des masses molaires moyennes en nombre (Mn) avec la conversion en monomères ;
- évaluer les caractéristiques colloïdales du latex (diamètre moyen des particules, distribution en taille des particules (polydispersité)). Les résultats obtenus sont présentés dans le Tableau 3 ci-dessous.

**Tableau 3**

| Temps (h) | Conversion (%) | M_{n, exp}^{a} g.mol⁻¹ | Mₙ, théo^{b} g.mol⁻¹ | Iₚ^{a} | f^{c} | dz^{d} (nm) | σ^{e} | Nₚ^{f} (10¹⁵/ cm³) |
|---|---|---|---|---|---|---|---|---|
| 1,5 | 11,2 | 7700 | 6900 | 2,1 | 0,86 | - | - | - |
| 2,5 | 18,8 | 11400 | 9800 | 1,53 | 0,82 | - | - | - |
| 3,5 | 23,4 | 12300 | 11600 | 1,59 | 0,92 | - | - | - |
| 5 | 29,9 | 14400 | 14000 | 1,53 | 0,97 | - | - | - |
| 6,33 | 34,9 | 17800 | 15900 | 1,39 | 0,88 | - | - | - |
| 23 | 77,1 | 36300 | 31900 | 1,27 | 0,87 | 47,4 | 0,211 | 2,45 |
| 53,5 | 78,7 | 36800 | 32500 | 1,25 | 0,87 | 48,2 | 0,306 | 2,38 |

| | | | | | | | | |
|---|---|---|---|---|---|---|---|---|
| (a) Déterminées par chromatographie d'exclusion stérique dans le THF, avec calibration au polyméthacrylate de méthyle, après méthylation des unités acide méthacryliques en unités méthacrylate de méthyle ; (b) Calculées à partir d'unités méthacrylate de méthyle ; (c) Efficacité d'amorçage ; (d) Diamètre moyen en z des particules ; (e) Polydispersité des latex ; (f) Nombre de particules | | | | | | | | |

Le latex obtenu en fin de polymérisation est stable et le diamètre des particules obtenu par diffusion dynamique de la lumière est faible (environ 48 nm). La distribution en taille de particules est plus large (σ environ de 0,2 à 0,3) que pour l'homopolymérisation du méthacrylate de méthyle à 40°C.

### Exemple 4 : Préparation du macroamorceur poly(acide méthacrylique-co-styrène sulfonate de sodium)

L'exemple 4 illustre la préparation d'un copolymère vivant poly(acide méthacrylique-co-styrène sulfonate de sodium), utilisé comme macroamorceur, agent de contrôle et stabilisant pour la mise en oeuvre du procédé de l'invention, l'acide méthacrylique et le styrène sulfonate de sodium étant abrégés MAA et SS.

Pour ce faire, un mélange contenant 24 g d'acide méthacrylique (2,0 mol.L⁻¹), 6,17 g de styrène sulfonate de sodium (0,193 mol.L⁻¹) et 127,34 g de diméthylsulfoxyde est dégazé à température ambiante par un bullage d'azote pendant 20 minutes. L'alcoxyamine BlocBuilder® (comme dans l'exemple 1) est ensuite ajoutée ((1,197 g, 2,23*10⁻² mol.L⁻¹). Le dégazage est poursuivi pendant 10 minutes. Le mélange dégazé est introduit dans six tubes Schlenks de 25 mL. Six cycles de gel/dégel sont effectués pour supprimer toute trace d'oxygène. La polymérisation est réalisée à 76°C et le temps t=0 est déclenché. Le macroamorceur obtenu est le P(MAA-co-SS)-SG₁. Des prélèvements sont réalisés à intervalles de temps réguliers afin de :
- déterminer la cinétique de polymérisation (détermination des conversions par RMN ¹H (DMSO d₆, 200 MHz) ;
- suivre l'évolution des masses molaires moyennes en nombre (Mn) en fonction de la conversion en monomères.

Le tableau 4 ci-dessous présente l'évolution des conversions en fonction du temps ainsi que l'évolution des masses molaires moyennes en nombre avec la conversion.

**Tableau 4**

| Temps (min) | Conversion massique | M_{n, expérimental} | M_{n théorique} | Iₚ |
|---|---|---|---|---|
| | (%) | (g.mol⁻¹) | (g.mol⁻¹) | |
| 15 | 24 | 7 300 | 2700 | 1,25 |
| 30 | 42 | 8 180 | 4350 | 1,25 |
| 45 | 45,4 | 9230 | 4 700 | 1,2 |
| 60 | 54,4 | 10 680 | 5 550 | 1,18 |
| 90 | 60,2 | 11 470 | 6 100 | 1,18 |
| 120 | 85 | 12290 | 8 500 | 1,18 |

Les Mₙ expérimentales sont déterminées par chromatographie d'exclusion stérique en solution dans de l'eau à 0,5% molaire en LiNO₃, à l'aide d'un appareillage équipé d'une triple détection et les calculs de Mn sont basés sur le signal de diffusion de la lumière et l'indice de réfraction.

### Exemple 5 :

L'exemple 5 illustre la synthèse de nanoparticules chevelues de copolymères blocs poly(méthacrylate de sodium-co-styrène sulfonate de sodium)-b-poly(méthacrylate de méthyle-co-styrène) à partir du macroamorceur préparé dans l'exemple 4.

Dans un ballon monocol de 100 mL sont introduits 25,78 g d'eau permutée, 1,8816 g de macroamorceur P(MAA-co-SS)-SG₁ (2,73*10⁻³ mol) préparé dans l'exemple 4, 18,8 g de soude 1M (1 éq. par rapport aux unités acide méthacrylique) et 0,1693 g de Na₂CO₃ (3,58*10⁻² mol.L⁻¹). Ce mélange est agité à température ambiante, pendant 15 minutes environ, jusqu'à dissolution complète du macroamorceur, qui est alors sous la forme poly(méthacrylate de sodium-co-styrène sulfonate de sodium). 18,8 g de méthacrylate de méthyle et 1,09 g de styrène sont ensuite ajoutés (taux de solide=19,32%) et le mélange est dégazé par un bullage d'azote à température ambiante pendant 30 minutes. La température est ensuite augmentée à 85°C et le temps t=0 est déclenché à 60°C. Des prélèvements sont réalisés à intervalles réguliers afin de :
- déterminer la cinétique de polymérisation par gravimétrie (mesure d'extrait sec) ;
- suivre l'évolution des masses molaires moyennes en nombre (Mn) avec la conversion en monomères ;
- évaluer les caractéristiques colloïdales du latex (diamètre moyen des particules, distribution en taille des particules (polydispersité)). Les résultats obtenus sont présentés dans le Tableau 5 suivant.

**Tableau 5**

| Temps (h) | Conversion (%) | M_{n, exp}^{a} g.mol⁻¹ | Mₙ, théo^{b} g.mol⁻¹ | Iₚ^{a} | Dz^{c} (nm) | ∑^{d} |
|---|---|---|---|---|---|---|
| 0,916 | 42 | 33 000 | 50 600 | 1,23 | - | - |
| 2,5 | 57,5 | - | 64 600 | | - | - |
| 3,25 | 61,7 | 47200 | 68 450 | 1,4 | - | - |
| 5 | 67,8 | 58 200 | 74 000 | 1,3 | - | - |
| 7 | 69 | - | 75 000 | | 45,8 | 0,076 |
| 8 | 7,5 | 59 800 | 76 500 | 1,3 | 39,5 | 0,133 |

| | | | | | | |
|---|---|---|---|---|---|---|
| (a) Déterminées par chromatographie d'exclusion stérique dans le DMF, avec calibration au polyméthacrylate de méthyle, après méthylation des unités acide méthacryliques en unités méthacrylate de méthyle ; (b) Calculées à partir d'unités méthacrylate de méthyle ; (c) Diamètre moyen en nombre des particules ; (d) Polydispersité des latex ; | | | | | | |

Le latex obtenu en fin de polymérisation est stable et le diamètre des particules obtenu par diffusion dynamique de la lumière est faible (environ 40 nm). La distribution en taille de particules est relativement étroite (σ environ de 0,08 à 0,1).

## Revendications

1. Procédé de préparation d'une dispersion aqueuse de particules polymériques comprenant les étapes suivantes :
a) une étape de mise en contact, en milieu aqueux, d'au moins un monomère hydrophobe méthacrylate seul ou en mélange avec d'autres monomères hydrophobes, avec un macroamorceur vivant, ce macroamorceur vivant étant obtenu par polymérisation d'un ou plusieurs monomères en présence d'un agent de contrôle alcoxyamine répondant à l'une des formules suivantes : 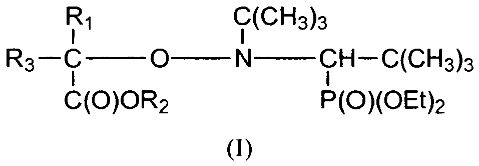 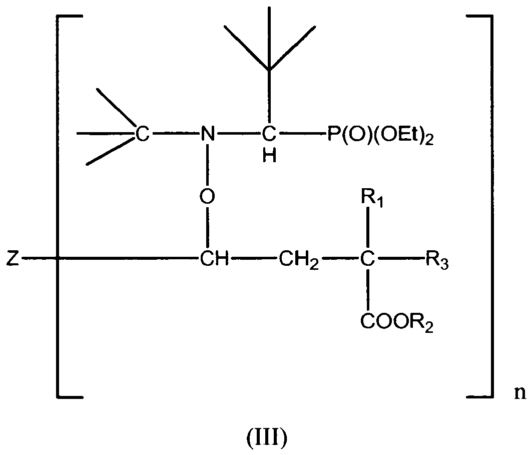 dans lesquelles :
* R₁ et R₃, identiques ou différents, représentent un groupe alkyle, linéaire ou ramifié, ayant un nombre d'atomes de carbone allant de 1 à 3 ;
* R₂ représente un atome d'hydrogène, un groupe alkyle, linéaire ou ramifié, ayant un nombre d'atomes de carbone allant de 1 à 8, un groupe phényle, un métal alcalin, un ion ammonium;
* Z représente un groupe aryle ou un groupe de formule Z₁-[X-C(O)]ₙ, dans laquelle Z₁ représente une structure polyfonctionnelle provenant par exemple d'un composé du type polyol, X est un atome d'oxygène, un atome d'azote porteur d'un groupement carboné ou d'un atome d'hydrogène, ou un atome de soufre ; et
- n est un nombre entier supérieur ou égal à 2 ;
l'un au moins des monomères entrant dans la constitution du macroamorceur vivant étant un monomère hydrophile méthacrylique ou méthacrylate et le macroamorceur obtenu étant apte à être réengagé dans une réaction de polymérisation à une température inférieure à 100°C ;
b) une étape de chauffage à une température inférieure à 100°C, moyennant quoi la polymérisation du ou des monomères mentionnés à l'étape a) est engagée à partir du macroamorceur tel que défini à l'étape a).

2. Procédé selon la revendication 1, dans lequel le monomère hydrophile méthacrylique ou méthacrylate est choisi parmi l'acide méthacrylique, les sels d'acide méthacrylique, un méthacrylate de poly(alkylène)glycol et les mélanges de ceux-ci.

3. Procédé selon la revendication 1 ou 2, dans lequel le macroamorceur comprend, en outre, des unités répétitives issues de la polymérisation d'au moins un monomère hydrophile autre que celui mentionné à la revendication 1 ou 2, ledit monomère hydrophile étant choisi parmi les monomères styréniques hydrophiles, tels que le styrène sulfonate, les monomères acrylamides ou méthacrylamides substitués ou non.

4. Procédé selon l'une quelconque des revendications précédentes, dans lequel le macromamorceur vivant comprend, en outre, des unités répétitives issues de la polymérisation d'au moins un monomère hydrophobe styrénique, tel que le styrène ou l'α-méthylstyrène.

5. Procédé selon l'une quelconque des revendications 3 et 4, dans lequel le macroamorceur vivant comprend une proportion supérieure à 80% en moles, de préférence encore supérieure à 90% en moles, d'unités répétitives issues de la polymérisation d'au moins un monomère hydrophile méthacrylique ou méthacrylate tel que mentionné à la revendication 1.

6. Procédé selon l'une quelconque des revendications précédentes, dans lequel le macroamorceur vivant est un copolymère comprenant des unités répétitives issues de la polymérisation de l'acide méthacrylique et du styrène.

7. Procédé selon l'une quelconque des revendications précédentes, dans lequel l'agent de contrôle répond à la formule suivante :

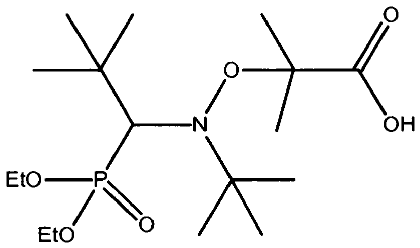

8. Procédé selon l'une quelconque des revendications 1 à 6, dans lequel l'agent de contrôle répond à la formule suivante :

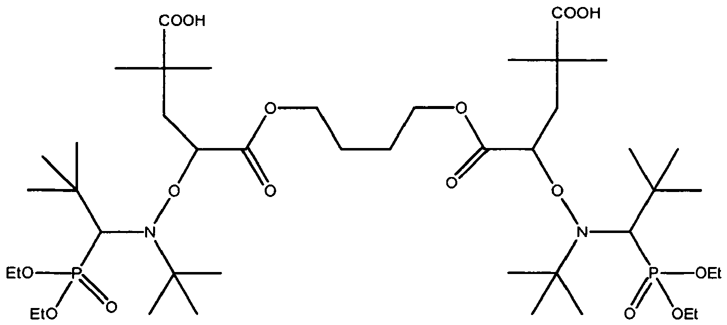

9. Procédé selon l'une quelconque des revendications précédentes, dans lequel le macroamorceur vivant comprenant une extrémité SG1 de formule suivante :

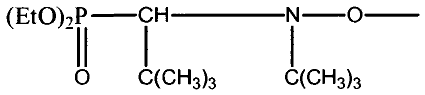

10. Procédé selon l'une quelconque des revendications précédentes, dans lequel le monomère hydrophobe méthacrylate est un méthacrylate d'alkyle.

11. Procédé selon l'une quelconque des revendications précédentes, dans lequel les autres monomères hydrophobes ajoutés au cours de l'étape a) sont choisis parmi les acrylates d'alkyles, les monomères styréniques tels que le styrène et les mélanges de ceux-ci et/ou au moins un monomère hydrophile.

12. Procédé selon la revendication 11, dans lequel le ou les monomères hydrophobes méthacrylates sont présents en une proportion supérieure à 80% en moles, de préférence supérieure à 90% en moles, par rapport au nombre de moles total de monomères introduits au cours de l'étape a).

13. Procédé selon l'une quelconque des revendications précédentes, comprenant, en outre, une étape de polymérisation en un polymère du ou des monomères non convertis au cours de l'étape b).

14. Dispersion aqueuse de particules susceptible d'être obtenue par le procédé tel que défini selon l'une quelconque des revendications 1 à 13.

15. Utilisation de la dispersion aqueuse telle que définie à la revendication 14 dans le domaine des revêtements de surface, notamment comme agents tensio-actifs ou stabilisants de suspensions de polymères en milieu aqueux.

## Claims

1. Method for the preparation of an aqueous dispersion of polymer particles comprising the following stages:
a) a stage of bringing at least one hydrophobic methacrylate monomer, alone or as a mixture with other hydrophobic monomers, into contact, in an aqueous medium, with a living macroinitiator, this living macroinitiator being obtained by polymerization of one or more monomers in the presence of an alkoxyamine control agent corresponding to either of the following formulae: 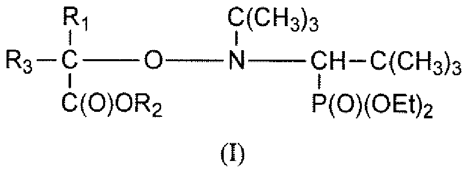 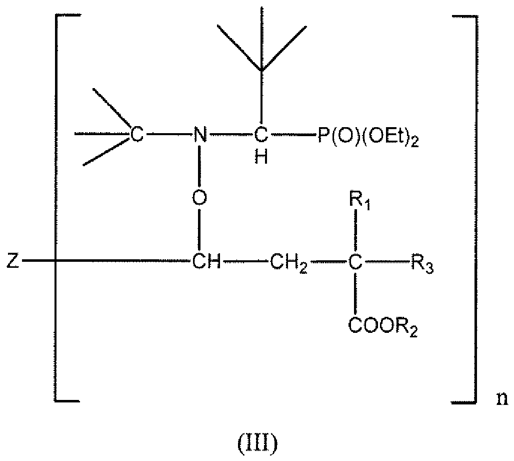 in which:
* R₁ and R₃, which are identical or different, represent a linear or branched alkyl group having a number of carbon atoms ranging from 1 to 3;
* R₂ represents a hydrogen atom, a linear or branched alkyl group having a number of carbon atoms ranging from 1 to 8, a phenyl group, an alkali metal or an ammonium ion;
* Z represents an aryl group or a group of formula 2₁-[X-C(O)]ₙ, in which Z₁ represents a polyfunctional structure originating, for example, from a compound of the polyol type, X is an oxygen atom, a nitrogen atom, carrying a carbon-based group or a hydrogen atom, or a sulfur atom, and n is an integer greater than or equal to 2;
one at least of the monomers participating in the structure of the living macroinitiator being a hydrophilic methacrylic or methacrylate monomer and the macroinitiator obtained being capable of being set under way again in a polymerization reaction at a temperature of less than 100°C;
b) a stage of heating at a temperature of less than 100°C, by means of which the polymerization of the monomer or monomers mentioned in stage a) is set under way starting from the macroinitiator as defined in stage a).

2. Process according to Claim 1, in which the hydrophilic methacrylic or methacrylate monomer is chosen from methacrylic acid, methacrylic acid salts, a poly(alkylene glycol) methacrylate and mixtures of these.

3. Process according to Claim 1 or 2, in which the macroinitiator additionally comprises repeat units resulting from the polymerization of at least one hydrophilic monomer other than that mentioned in claim 1 or 2, said hydrophilic monomer being chosen from hydrophilic styrene monomers, such as styrenesulfonate, or acrylamide or methacrylamide monomers, which may or may not be substituted.

4. Process according to any one of the preceding Claims, in which the living macroinitiator additionally comprises repeat units resulting from the polymerization of at least one hydrophobic styrene monomer, such as styrene or α-methylstyrene.

5. Process according to either one of Claims 3 and 4, in which the living macroinitiator comprises a proportion of greater than 80 mol%, more preferably of greater than 90 mol%, of repeat units resulting from the polymerization of at least one hydrophilic methacrylic or methacrylate monomer as mentioned in claim 1.

6. Process according to any one of the preceding claims, in which the living macroinitiator is a copolymer comprising repeat units resulting from the polymerization of methacrylic acid and styrene.

7. Process according to any one of the preceding claims, in which the control agent corresponds to the following formula:

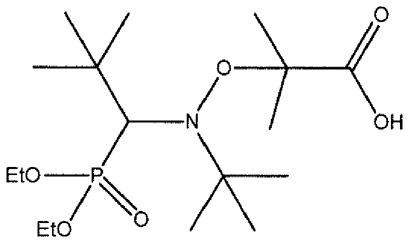

8. Process according to any one of Claims 1 to 6, in which the control agent corresponds to the following formula:

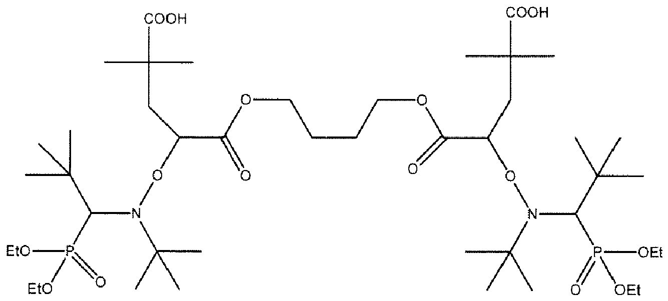

9. Process according to any one of the preceding claims, in which the living macroinitiator comprises an end SG₁ with the following formula:

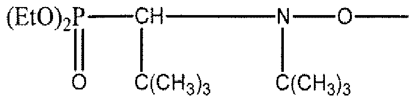

10. Process according to any one of the preceding claims, in which the hydrophobic methacrylate monomer is an alkyl methacrylate.

11. Process according to any one of the preceding claims, in which the other hydrophobic monomers added during stage a) are chosen from alkyl acrylates, styrene monomers, such as styrene, and mixtures of these and/or at least one hydrophilic monomer.

12. Process according to Claim 11, in which the hydrophobic methacrylate monomer or monomers are present in a proportion of greater than 80 mol%, preferably of greater than 90 mol%, with respect to the total number of moles of monomers introduced during stage a).

13. Process according to any one of the preceding claims, additionally comprising a stage of polymerization, to give a polymer, of the monomer or monomers not converted during stage b).

14. Aqueous dispersion of particles which is capable of being obtained by the process as defined in any one of Claims 1 to 13.

15. Use of the aqueous dispersion as defined in Claim 14 in the field of surface coatings, in particular as surface-active or stabilizing agents for suspensions of polymers in an aqueous medium.

## Patentansprüche

1. Verfahren zur Herstellung einer wässrigen Dispersion von Polymerteilchen mit den folgenden Schritten:
a) einem Schritt des Inberührungbringens mindestens eines hydrophoben Methacrylatmonomers für sich alleine oder als Mischung mit anderen hydrophoben Monomeren mit einem lebenden Makroinitiator in wässrigem Medium, wobei dieser lebende Makroinitiator durch Polymerisation von einem oder mehreren Monomeren in Gegenwart eines Alkoxyamin-Reglers einer der folgenden Formeln: 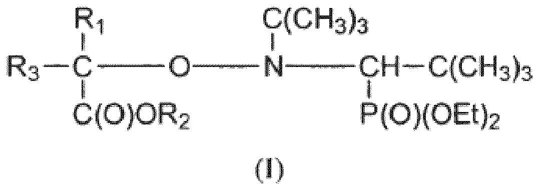 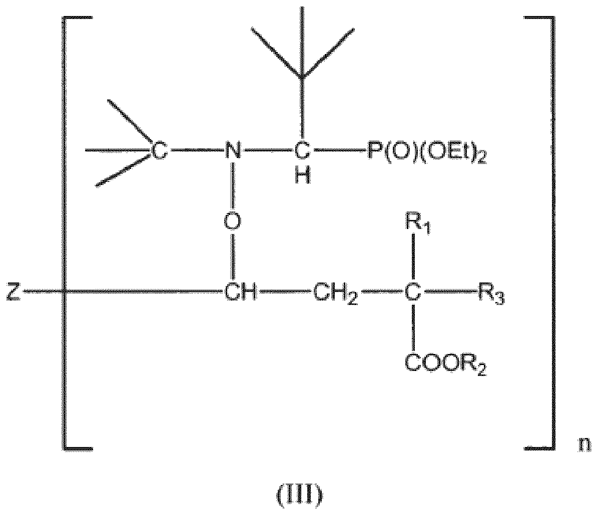 worin:
* R₁ und R₃ gleich oder verschieden sind und für eine lineare oder verzweigte Alkylgruppe mit 1 bis 3 Kohlenstoffatomen stehen;
* R₂ für ein Wasserstoffatom, eine lineare oder verzweigte Alkylgruppe mit 1 bis 8 Kohlenstoffatomen, eine Phenylgruppe, ein Alkalimetall oder ein Ammoniumion steht;
* Z für eine Arylgruppe oder eine Gruppe der Formel 2₁-[X-C(O)]ₙ, worin Z₁ für eine polyfunktionelle Struktur, z.B. aus einer Verbindung vom Polyoltyp, steht, X für ein Sauerstoffatom, ein Stickstoffatom mit einer kohlenstoffhaltigen Gruppe oder einem Wasserstoffatom oder ein Schwefelatom steht, steht und
- n für eine ganze Zahl größer gleich 2 steht;
wobei es sich bei mindestens einem der in den Aufbau des lebenden Makroinitiators eingehenden Monomere um ein hydrophiles Methacryl- oder Methacrylatmonomer handelt und der erhaltene Makroinitiator in einer Polymerisationsreaktion bei einer Temperatur unter 100°C wieder in Gang gesetzt werden kann, erhalten wird;
b) einem Schritt des Erhitzens auf eine Temperatur unter 100°C, wodurch die Polymerisation des bzw. der in Schritt a) erwähnten Monomere ausgehend von dem in Schritt a) definierten Makroinitiator in Gang gesetzt wird.

2. Verfahren nach Anspruch 1, bei dem man das hydrophile Methacryl- oder Methacrylatmonomer unter Methacrylsäure, Salzen von Methacrylsäure, einem Poly(alkylen)glykolmethacrylat und Mischungen davon auswählt.

3. Verfahren nach Anspruch 1 oder 2, bei dem der Makroinitiator außerdem Wiederholungseinheiten, die sich aus der Polymerisation mindestens eines anderen hydrophilen Monomers als dem in Anspruch 1 oder 2 aufgeführten ergeben, umfasst, wobei das hydrophile Monomer unter hydrophilen Styrolmonomeren, wie Styrolsulfonat, und gegebenenfalls substituierten Acrylamid- oder Methacrylamidmonomeren ausgewählt wird.

4. Verfahren nach einem der vorhergehenden Ansprüche, bei dem der lebende Makroinitiator außerdem Wiederholungseinheiten, die sich aus der Polymerisation mindestens eines hydrophoben Styrolmonomers, wie Styrol oder α-Methylstyrol, ergeben, umfasst.

5. Verfahren nach einem der Ansprüche 3 und 4, bei dem der lebende Makroinitiator einen Anteil von mehr als 80 Mol-%, weiter bevorzugt mehr als 90 Mol-%, Wiederholungseinheiten, die sich aus der Polymerisation mindestens eines hydrophilen Methacryl- oder Methacrylatmonomers gemäß Anspruch 1 ergeben, umfasst.

6. Verfahren nach einem der vorhergehenden Ansprüche, bei dem es sich bei dem lebenden Makroinitiator um ein Copolymer handelt, das Wiederholungseinheiten, die sich aus der Polymerisation von Methacrylsäure und Styrol ergeben, umfasst.

7. Verfahren nach einem der vorhergehenden Ansprüche, bei dem der Regler der folgenden Formel entspricht:

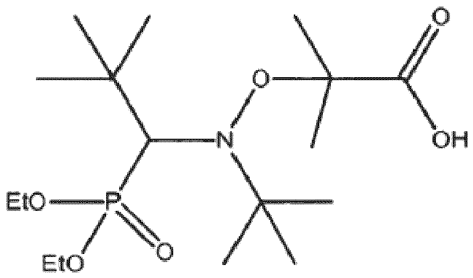

8. Verfahren nach einem der Ansprüche 1 bis 6, bei dem der Regler der folgenden Formel entspricht:

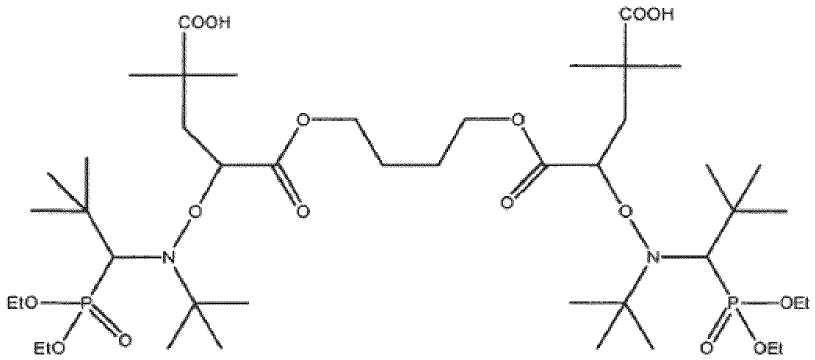

9. Verfahren nach einem der vorhergehenden Ansprüche, bei dem der lebende Makroinitiator ein Ende SG1 der folgenden Formel umfasst:

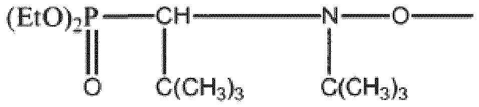

10. Verfahren nach einem der vorhergehenden Ansprüche, bei dem es sich bei dem hydrophoben Methacrylatmonomer um ein Alkylmethacrylat handelt.

11. Verfahren nach einem der vorhergehenden Ansprüche, bei dem man die im Lauf von Schritt a) hinzugefügten anderen hydrophoben Monomere unter Alkylacrylaten, Styrolmonomeren wie Styrol und Mischungen davon und/oder mindestens einem hydrophilen Monomer auswählt.

12. Verfahren nach Anspruch 11, bei dem das bzw. die hydrophoben Methacrylatmonomere in einem Anteil von mehr als 80 Mol-%, vorzugsweise mehr als 90 Mol-%, bezogen auf die Gesamtmolzahl der im Lauf von Schritt a) eingetragenen Monomere, vorliegen.

13. Verfahren nach einem der vorhergehenden Ansprüche, das außerdem einen Schritt der Polymerisation des oder der im Lauf von Schritt b) nicht umgesetzten Monomere zu einem Polymer umfasst.

14. Wässrige Dispersion von Teilchen, die nach dem Verfahren gemäß einem der Ansprüche 1 bis 13 erhältlich ist.

15. Verwendung der wässrigen Dispersion gemäß Anspruch 14 auf dem Gebiet der Lacke, insbesondere als Tenside oder Stabilisatoren von Suspensionen von Polymeren in wässrigem Medium.
